# EUROPEAN PATENT APPLICATION

(11) **EP 2 221 340 A1**
(43) Date of publication of application: **25.08.2010**
(21) Application number: 09153315.8
(22) Date of filing: 20.02.2009
(51) Int. Cl.: C08L 25/00, C08L 51/04, B65D 1/00, C08L 55/02, B29C 49/00

(54) **Blow molded containers made of vinyl aromatic polymer**

(71) Applicant: Total Petrochemicals Research Feluy, 7181 Seneffe (Feluy) (BE)
(72) Inventor: The designation of the inventor has not yet been filed
(74) Representative: Neel, Henry

(57) **Abstract**

The present invention is a blow molded container made of a composition comprising essentially a vinyl aromatic polymer wherein the tensile modulus (measured according to ISO 527-2 on the composition) of the said composition is ranging from about 2000 to about 3300 MPa.

## Description

### [Field of the invention]

The present invention relates to blow molded containers made of vinyl aromatic polymer. By way of example the vinyl aromatic polymer is polystyrene, the containers are bottles and they are made by extrusion blow molding or injection blow molding or injection stretch blow molding. The container is also referred as "hollow body".

### [The prior art and the technical problem]

JP2003206385A describes a rubber-modified styrenic resin composition for injection blow molding which very hardly allows black-dot foreign matters to occur in a molded article when a molding machine is restarted after its stop and which is excellent in mold releasability and moldability in continuous molding. This rubber-modified styrenic resin composition is prepared by adding (b) 0.006-0.5 pt.wt. phenolic thermal degradation inhibitor and 0.02-0.5 pt.wt. of (c) a higher fatty acid metal salt and (d) a higher fatty acid to (a) 100 pts.wt. rubber-modified styrenic resin containing rubbery polymer particles dispersed therein.

JP7062193A published in 1995 describes a styrene resin composition which is excellent in moldability and releasability from a mold, hardly generates contaminants on restarting a molding machine, and is suitable for injection blow molding by compounding a rubber-modified styrene resin with specific additives. The composition is prepared by compounding 100 pts.wt. rubber-modified styrene resin containing rubber particles dispersed therein with 0.02-2 pts.wt. metal salt of a 12-22C higher fatty acid and 0.02-1 pt.wt. polyethylene glycol having an average mol.wt. of 600 or higher. The composition can easily be released from a mold core in injection blow molding, gives a container-shaped item with a small variation in wall thickness in both the directions of circumference and height, and hardly generates black spots in a molded item on restarting a molding machine even after the machine is used for a long time.

JP2005068429A provides a rubber modified styrene resin composition for extrusion having a large sheet extrusion rate, excellent in environmental stress cracking-resistance of the fabricated sheet, low in contamination and having improved molding workability such as vacuum molding and blow molding. Said rubber modified styrene resin composition comprises (A) a styrene based copolymer as a continuous phase obtained by copolymerizing a specific ratio of each (i-1) a styrene based monomer, (i-2) a vinyl cyanide based monomer, (i-3) other copolymerizable vinyl monomer, and a polyfunctional maleimide based monomer, and (B) rubber particles as a dispersed phase, wherein the rubber content in the resin composition is 1-40 wt.% and (A) the styrene based copolymer has 150,000-450,000 of weight average molecular weight and 22-33 of MIR calculated from the following formula MIR=HMI/MI, HMI: MFR (g/10 min) at 250°C under 10kg of load, MI: MFR (g/10 min) at 250°C under 1 kg of load.

JP2005225960A describes a rubber-modified styrenic resin composition which stably blows parisons and shows an excellent draw-down resistance in blow molding, yields a blow molded article with little nonuniform wall thickness and a good appearance and allows a good recycability of the scraps of the molded article occurring in its molding. Said rubber-modified styrenic resin composition contains a rubbery polymer in a matrix polystyrenic resin as dispersion particles. The polystyrenic resin has a weight-average molecular weight of 250,000-300,000 and a Z-average molecular weight of 500,000. The ratio of the weight-average molecular weight to the number-average molecular weight (Mw/Mn) is not less than 2.5 and less than 3. The ratio of the Z-average molecular weight to the weight-average molecular weight (Mz/Mw) is not less than 1.9. The average particle size of the dispersion particles is 0.5-5 mm. The amount of a gel in the resin composition is 10-24 wt.% and the amount of methanol solubles is not more than 1.5 wt.% in the resin composition.

JP2005145560A describes how to improve moldability in obtaining containers for drinks by injection-blow-molding HIPS, to retain such physical properties as spout strength, and buckling strength, etc., of the obtained containers for drinks, to reduce elution of organic low-molecular substances from the containers for drinks, and to improve the stability in the weather resistance of the containers. Said containers for drinks are provided that are obtained by injection-blow-molding a high-impact polystyrene resin composite having the compositions exhibiting the ranges shown in the following items (a) to (d):
(a) a high-impact polystyrene resin whose melt-flow rate is in the range of 0.5 to 30 g/minute, and whose rubber content rate is within the range of 1 to 20 wt.%:100 pts.wt.;
(b) a volatile plastic agent whose distillation temperature for 50 volume% under normal temperatures is within the range of 150 to 450°C: in the range of 0.01 to 10 pts.wt.;
(c) a styrene monomeric substance content of the high-impact polystyrene resin is less than 100 ppm; and
(d) the amount of an organic low-molecular substance content including styrene monomeric substances of the high-impact polystyrene resin is less than 150 ppm.

WO 2008040821 relates to a hollow body with a capacity of at least 250 ml, the casing of which consists of polystyrene and is produced by injection stretch blow moulding. In the examples the E modulus is between 1880 and 1980 MPa.

WO 2007124894 relates to a procedure for the manufacturing of a plastic container, in particular a plastic bottle, in which a preform that has been made from polystyrene is heated and inserted into a form cavity of a blow mold of a stretch blow molding machine. There the preform is blown by means of a high pressure gas, usually air, according to the form cavity of the blow form and thereby lengthened by means of a stretch rod. The finished blown container is removed from the form. The procedure is in particular characterized by the facts that a preform made from polystyrene, which is made with an average wall thickness of approximately 1.6 mm to 3.4 mm, is inserted in the form cavity and that the stretch blow procedure of the preform is conducted at a temperature of 125°C to 140°C. No modulus is mentionned in this prior art.

US 3536500 published in 1970 describes a container being blow molded out of an injection molded parison of polystyrene wherein one of the mold elements was rotated to orient the molecules.

GB 1110703 published in 1968 and GB 1037115 published in 1966 describe the blow molding of polystyrene to make hollow articles.

US 2004 142132 describes an injection blow-molded disposable tumbler formed from a polymeric material and including a fortified upper rim having a thickness greater than the adjacent sidewall. The tumbler may be formed of a variety of resinous materials including polystyrene.

US 4595552 decribes an injection molding device capable of producing a polystyrene parison capable of being utilized in an economically feasible blow molded plastic bottle for pressurized beverages. Polystyrene bottles are described.

In the above prior arts only WO 2008040821 mentions the E modulus of polystyrene.

It has now been discovered that to make a blow molded container from a composition comprising essentially a vinyl aromatic polymer the tensile modulus of the said composition has to be ranging from about 2000 to about 3300 MPa. In a specific embodiment the composition comprising essentially a vinyl aromatic polymer and having a tensile modulus ranging from about 2000 to about 3300 MPa is a blend of a crystal polystyrene and a HiPS (High Impact Polystyrene).

The blend of a crystal polystyrene and a HiPS has already been described in US 3221954 but only as a foam. US 3221954 relates to a blow molded container which consists of (i) a foam resin core, (ii) a non-porous, impervious, tough resin outer skin, and (iii) a non-porous, impervious, tough resin inner skin, said core comprising 50 to 94% of the total thickness of the skins and core, said core being integrally united to the skins. The foamed core is preferably formed from foamed polystyrene, foamed polyethylene, foamed polypropylene, foamed copolymer of ethylene and propylene, foamed vinyl chloride polymer, or foamed polyurethanes. When employing polystyrene, there can be used normal crystal grade polystyrene or high impact polystyrene or a mixture containing 5 to 95% normal crystal grade polystyrene and the balance high impact polystyrene.

### [Brief description of the invention]

The present invention is a blow molded container made of a composition comprising essentially a vinyl aromatic polymer wherein the tensile modulus (measured according to ISO 527-2 on the composition) of the said composition is ranging from about 2000 to about 3300 MPa.

Key features of the invention is to adapt rigidity and impact properties to the application.

Advantageously the above composition comprises at least 90%, preferably 95% by weight of one or more vinyl aromatic polymers.

In a specific ambodiment the composition is a blend of a vinyl aromatic polymer and of an agent capable to give to the blend a tensile modulus ranging from about 2000 to about 3300 MPa.

Advantageously the composition comprising essentially a vinyl aromatic polymer (more precisely one or more vinyl aromatic polymers) is a blend of a crystal polystyrene and a HiPS (High Impact Polystyrene).

In a specific embodiment the blow molded container of the invention comprises one or more additional layers.

### [Detailed description of the invention]

**As regards the vinyl aromatic polymer,** mention may be made of:
- polystyrene, elastomer-modified polystyrene,
- copolymers of styrene and acrylonitrile (SAN), elastomer-modified SAN, in particular ABS, which is obtained, for example, by grafting (graft polymerization) of styrene and acrylonitrile on a backbone of polybutadiene or of butadiene-acrylonitrile copolymer,
- mixtures of SAN and ABS,
- copolymers with styrene blocks and blocks made of butadiene or isoprene or of a mixture butadiene /isoprene, these block copolymers can be linear blocks copolymers or star blocks copolymers, they can be hydrogenated and/or fonctionnalized. These copolymers are described in ULLMANN'S ENCYCLOPEDIA OF INDUSTRIAL CHEMISTRY, fith edition (1995) Vol A26, pages 655-659, They are sold by Total Petrochemicals under the trade mark Finaclear®, by BASF under the trade mark Styrolux®, under the trade mark K-Resin® by Chevron Phillips Chemical,
- SBR (Styrene butadiene rubber),

Possible examples of the abovementioned elastomers are EPR (the abbreviation for ethylene-propylene rubber or ethylene- propylene elastomer), EPDM (the abbreviation for ethylene- propylene-diene rubber or ethylene-propylene-diene elastomer), polybutadiene, acrylonitrile- butadiene copolymer, polyisoprene, isoprene-acrylonitrile copolymer and copolymers with styrene blocks and blocks made of butadiene or isoprene or of a mixture butadiene /isoprene. These block copolymers can be linear blocks copolymers or star blocks copolymers, they can be hydrogenated and/or fonctionnalized (see above).

In the above vinyl aromatic polymer just mentioned, part of the styrene may be replaced by unsaturated monomers copolymerizable with styrene, for example alpha- methylstyrene or (meth)acrylates, Other examples of styrene copolymers which may be mentioned are chloropolystyrene, poly-alphamethylstyrene, styrene- chlorostyrene copolymers, styrene-propylene copolymers, styrenebutadiene copolymers, styrene-isoprene copolymers, styrene-vinyl chloride copolymers, styrene-vinyl acetate copolymers, styrene-alkyl acrylate copolymers (methyl, ethyl, butyl, octyl, phenyl acrylate), styrene-alkyl methacrylate copolymers (methyl, ethyl, butyl, phenyl methacrylate), styrene methyl chloroacrylate copolymers and styrene-acrylonitrile-alkyl acrylate copolymers.

In a specific embodiment the vinyl aromatic polymer comprises :
i) from 60 to 100 weight % of one or more C₈-₁₂ vinyl aromatic monomers; and
ii) from 0 to 40 weight % of one or more monomers selected from the group consisting of C₁₋₄ alkyl esters of acrylic or methacrylc acid and acrylonitrile and methacrylonitrile; which polymer may be grafted onto or occluded within from 0 to 20 weight % of one or more rubbery polymers.

By way of example rubbery polymers can be selected from the group consisting of:
a) co- and homopolymers of C₄₋₆ conjugated diolefins,
b) copolymers comprising from 60 to 85 weight % of one or more C₄₋₆ conjugated diolefins and from 15 to 40 weight % of a monomer selected from the group consisting of acrylonitrile and methacrylonitrile and
c) copolymers comprising from 20 to 60, preferably from 40 to 50 weight % of one or more C₈₋₁₂ vinyl aromatic monomers which are unsubstituted or substituted by a C₁₋₄ alkyl radical and from 60 to 40, preferably from 60 to 50 weight % of one or more monomers selected from the group consisting of C₄₋₆ conjugated diolefins.

The rubber may be prepared by a number of methods, preferably by emulsion or solution polymerization. These process are well known to those skilled in the art.

The vinyl aromatic polymers may be prepared by a number of methods. This process is well known to those skilled in the art and described for example in the above mentioned reference.

If present, preferably the rubber is present in an amount from about 3 to 10 weight %. Polybutadiene is a particularly useful rubber.

In the specific embodiment in which the vinyl aromatic polymer is polystyrene, it could be a crystal polystyrene or a rubber modified polystyrene. The rubber modified polystyrene is called HIPS (High Impact Polystyrene) .The process for making HIPS is well known to those skilled in the art. The rubber is "dissolved" in the styrene monomer (actually the rubber is infinitely swollen with the monomer). This results in two co- continuous phases. The resulting "solution" is fed to a reactor and polymerized typically under shear. When the degree of polymerization is about equal to the weight % of rubber in the system it inverts (e.g. the styrene/styrene polymer phase becomes continuous and the rubber phase becomes discontinuous. After phase inversion the polymer is finished in a manner essentially similar to that for finishing polystyrene. The polymer is prepared using conventional bulk, solution, or suspension polymerization techniques.
The vinyl aromatic polymers of the present invention may be co- or homopolymers of C₈₋₁₂ vinyl aromatic monomers. Some vinyl aromatic monomers may be selected from the group consisting of styrene, alpha methyl styrene and para methyl styrene. Preferably the vinyl aromatic monomer is styrene. The vinyl aromatic polymer may be a copolymer comprising from 60 to 100 weight % of one or more C₈₋₁₂ vinyl aromatic monomers; and from 0 to 40 weight % of one or more monomers selected from the group consisting of C₁₋₄ alkyl esters of acrylic or methacrylc acid and acrylonitrile and methacrylonitrile. Suitable esters of acrylic and methacrylic acid include methyl acrylate, ethyl acyrlate, butyl acrylate, methyl methacrylate, ethyl methacrylate and butyl methacrylate. The vinyl aromatic polymers of the present invention may be rubber modified.

Advantageously the vinyl aromatic polymer is a monovinylaromatic polymer.

**As regards the composition comprising essentially a vinyl aromatic polymer wherein the tensile modulus of the said composition is ranging from about 2000 to about 3300 MPa,** the modulus is measured on the composition before the blow molding.

Said composition can be a blend of a vinyl aromatic polymer as described above and of an agent capable to give to the blend a tensile modulus ranging from about 2000 to about 3300 MPa. In another embodiment the composition can comprise at least 90%, preferably 95% by weight of one or more vinyl aromatic polymers.

When the composition comprises at least 90%, preferably 95% by weight of one vinyl aromatic polymer said vinyl aromatic polymer must have a tensile modulus ranging from about 2000 to about 3300 MPa. The man skilled in the art can select easily the convenient vinyl aromatic polymer in the above described vinyl aromatic polymers.

When the composition comprises at least 90%, preferably 95% by weight of two or more vinyl aromatic polymers the tensile Young's modulus of each of the vinyl aromatic polymers can be any provided the tensile modulus of the composition is ranging from about 2000 to about 3300 MPa.

Advantageously the composition, having a tensile modulus ranging from about 2000 to about 3300 MPa, comprising essentially a vinyl aromatic polymer is a blend of a crystal polystyrene and a HiPS (High Impact Polystyrene).

The composition of the present invention can be prepared by mixing the various ingredients in e.g. mixers, extruders of use in the technology of the thermoplastics.

The composition of the present invention can be prepared using additives provided these additives don't disturb the blow molding process. Exemplary additives include fillers, talc, organoclays (clays wetted by an organic compatibilizer), anti oxidants, UV stabilizers, lubricants, mineral oil, silicon oil, PE waxes, plasticizers, pigments and the like. Any additive known to be useful in preparing vinyl aromatic polymers to those of ordinary skill in the art of preparing such polymers can be used with the present invention. Furthermore, all known technologies for foamed, expended, lightened articles can be used to reduce density.

### As regards the blow molding processes, they are known per se.

Hollow thermoplastic articles, such as containers, bottles, etc., are typically produced by blow molding processes.

Typically, the extrusion blow molding process involves the use of a mold consisting of two separate halves or portions having cavities of particularly desired shapes and sizes. Usually one extrudes a sealed tube of molten material (commonly referred to as a "parison") places the tube between the mold halves, and closes the mold around the tube. The mold halves are closed around the tube at what is referred to as the "parting line." Fluid pressure is then introduced into the tube, forcing the molten tube against the walls of the cavities, conforming the tube to the shape thereof. The pressure is maintained until the molten material cools and solidifies. The pressure is then released, the mold halves are pulled apart, and the hardened article is ejected therefrom.

A conventional injection blow molding process usually includes three main stages of processing, namely, injection molding, blow molding, and ejection. Generally in the first stage, a molten polymer parison is injected onto a core pin that is placed between a top and a bottom injection mold during the first stage to produce a preform. Then in the second stage, the preform is placed between a top and bottom blow mold and gas is injected into the preform through the core pin to produce a hollowed thermoplastic article. Finally, the hollow thermoplastic article is ejected from the core pin.

In the injection stretch blow molding process the containers are made by stretching and blow molding a preform which is produced beforehand by injection molding. In such a process, substantially tubular preforms are used, which are closed at one of their axial ends and of which the other axial end is open and already has the final shape of the neck of the final container. Each preform is transferred to a blowing mold in which a cavity in the shape of the container to be obtained is bounded. The preform is arranged in the mold so that its open end extends outside the mold. Thus, a blow molding device can be conveyed to the neck of the preform in order to inject pressurized air into the preform. Simultaneously, a stretch rod is introduced axially into the preform so as to bear against the closed end at the bottom of the preform. The stretch rod thereby serves to efficiently control the axial deformation of the preform during the blow molding of the container.

One also can cite the compression blow molding, it allows containers to be produced directly from granules or pellets. Based on the continuous extrusion of the plastic material, which is then cut into pre-determined doses and inserted into an open mould and compression-shaped to make a preform. Inside the mould the preform is thermo-regulated to a temperature that allows it to be stretch-blown, thus forming the container.

## Claims

1. Blow molded container made of a composition comprising essentially a vinyl aromatic polymer wherein the tensile modulus (measured according to ISO 527-2 on the composition) of the said composition is ranging from about 2000 to about 3300 MPa.

2. Blow molded container according to claim 1 wherein the composition comprises at least 90%, preferably 95% by weight of one or more vinyl aromatic polymers.

3. Blow molded container according to claim 1 or 2 wherein the composition is a blend of a vinyl aromatic polymer and of an agent capable to give to the blend a tensile modulus ranging from about 2000 to about 3300 MPa.

4. Blow molded container according to claim 1 or 2 wherein the composition comprising essentially a vinyl aromatic polymer is a blend of a crystal polystyrene and a HiPS (High Impact Polystyrene).

5. Blow molded container according to according to any one of the preceding claims wherein it comprises one or more additional layers.

6. Blow molded container according to according to any one of the preceding claims wherein the blow molding process is extrusion blow molding.

7. Blow molded container according to according to claims 1 to 5 wherein the blow molding process is injection blow molding.

8. Blow molded container according to according to claims 1 to 5 wherein the blow molding process is injection stretch blow molding.
